# EUROPEAN PATENT SPECIFICATION

(11) **EP 3 306 505 B1**
(45) Date of publication and mention of the grant of the patent: **03.06.2020**
(21) Application number: 16799186.8
(22) Date of filing: 28.04.2016
(51) Int. Cl.: G06F 21/31

(54) **INFORMATION INPUT METHOD AND DEVICE**
INFORMATIONSEINGABEVERFAHREN UND -VORRICHTUNG
PROCÉDÉ ET DISPOSITIF D'ENTRÉE D'INFORMATIONS

(30) Priority: 28.05.2015 CN 201510282846
(43) Date of publication of application: 11.04.2018
(73) Proprietor: Alibaba Group Holding Limited, Grand Cayman (KY)
(72) Inventor: HE, Yong, Hangzhou 310099 (CN)
(74) Representative: Conroy, John
(86) International application number: PCT/CN2016/080440
(87) International publication number: WO 2016/188297

(56) References cited:
- CN-A- 103 810 414
- CN-A- 104 331 668
- US-A1- 2008 066 167
- US-A1- 2014 129 974
- US-A1- 2014 165 169
- US-B2- 8 006 096

## Description

### Technical Field

The present application relates to the field of data processing technologies, and in particular, to an information input method and apparatus.

### Background Art

With the development of mobile communication technologies, users often need to input information on mobile devices. Especially when information is input on a mobile phone, the size of a physical keyboard or a virtual keyboard is relatively small due to a limited size of the mobile phone, such that it is easy for a user to input information incorrectly. For example, the user intends to input a letter a, but actually inputs a letter adjacent to the letter a, such as s.

U.S. Patent Publication US 2008/0066167 A1 to Andri for "Password based access including error allowance," published 13 March 2009, discloses a system that enables a client user to access secure information or services using a security code even when the security code provided by the client user includes one or more errors. A level of error allowance may be selected by a system administrator based on a prescribed minimum level of security and the security code selected by the client user. The publication asserts that the application of error allowance can reduce the number of times a client user is denied access to requested information or services due to incorrect or mistyped security code input while also ensuring the prescribed minimum level of security is retained.

### Summary of the Invention

The invention is defined in the appended claims. The present application aims at solving one of the technical problems in the related art at least to some extent.

Therefore, one objective of the present application is to propose an information input method, which can reduce input errors caused by a small keyboard and enhance input effects.

Another objective of the present application is to propose an information input apparatus.

Additional aspects and advantages of the present application will be partially provided in the following description, and partially become apparent from the following description, or will be known through practices of the present application.

### Brief Description of the Drawings

The above and/or additional aspects and advantages of the present application will become apparent and readily comprehensible from the description of embodiments with reference to the accompanying drawings as follows, wherein:
FIG. 1 is a schematic flowchart of an information input method according to an embodiment of the present application;
FIG. 2 is a schematic flowchart of an information input method according to another embodiment of the present application;
FIG. 3 is a schematic flowchart of an information input method according to another embodiment of the present application;
FIG. 4 is a schematic flowchart of an information input method according to another embodiment of the present application;
FIG. 5 is a schematic structural diagram of an information input apparatus according to another embodiment of the present application; and
FIG. 6 is a schematic structural diagram of an information input apparatus according to another embodiment of the present application.

### Detailed Description

Embodiments of the present application will be described in detail in the following, examples of the embodiments are shown in the accompanying drawings, where identical or similar reference numerals represent identical or similar modules or modules having identical or similar functions throughout the text. The embodiments described in the following with reference to the accompanying drawings are exemplary and only intended to explain the present application, and cannot be construed as limiting the present application.

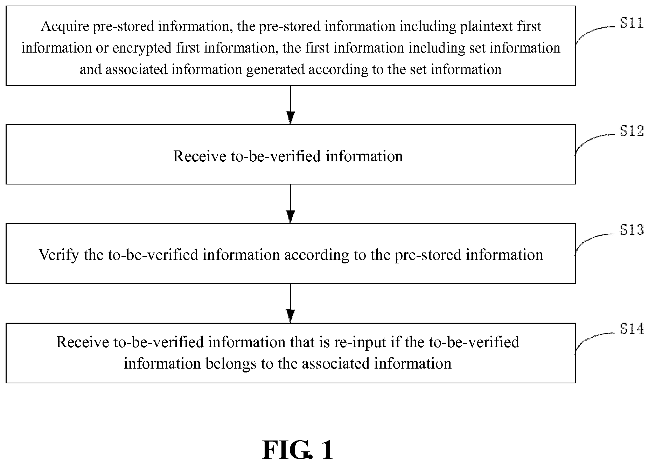

FIG. 1 is a schematic flowchart of an information input method according to an embodiment of the present application, the method including:
S11. Pre-stored information is acquired, the pre-stored information including plaintext first information or encrypted first information, the first information including set information and associated information generated according to the set information.

The method of this embodiment may be used for information verification in various scenarios, for example, for password verification, ID card number verification, bank card number verification, mobile phone number verification, and so on. In this embodiment, password verification is taken as an example.

Before the password verification, a user may preset a password. For example, the password is set as x. It can be understood that, the password x set by the user may include one or more information items, and each information item may be a number, a letter, or the like.

Further, by taking that the password is stored at a mobile phone terminal as an example, the password may be stored in plaintext at the mobile phone terminal, for example, directly stored as x. Or, in order to enhance security, a plaintext password is encrypted before being stored, for example, an encrypted x stored at the mobile phone terminal. It can be understood that, there are various encryption algorithms, which, for example, is specifically a Hash algorithm. In this embodiment, a Hash encrypted password stored at the mobile phone terminal is taken as an example. Assume that x is represented as H(x) after the Hash encryption is performed.

In the prior art, the pre-stored information is H(x) at most, and the verification will fail if what the user inputs is not x.

In this embodiment, not only H(x) can be stored, but also associated information can be obtained according to x, and information obtained after the Hash encryption is performed on the associated information is further stored at the mobile phone terminal.

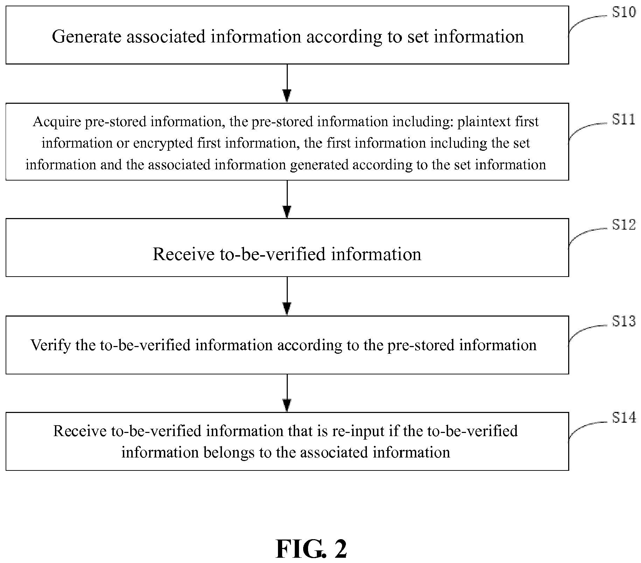

Specifically, with reference to FIG. 2, the method of this embodiment may further include:
S10. Associated information is generated according to the set information.

Optionally, the step of generating associated information according to the set information includes:
randomly selecting an information item from the set information, and acquiring a new information item corresponding to the selected information item, wherein a distance between positions of the new information item and the selected information item on a keyboard is in a preset range; and
replacing the selected information item in the set information with the new information item to obtain the associated information.

For example, one item of the password x set by the user is a, then a character at a small distance with a on a virtual keyboard or a physical keyboard is selected as a new character corresponding to a. Assuming that the new character is represented by a', a' is used to place a to compose a new password x'. The new password x' is associated information of x. After the Hash encryption is performed, the encrypted associated information may be represented as: H(x'), H(x"), ..., and this sequence is recorded as H'. Specifically, for example, assuming that x is abcd, and the character at a small distance with a includes a', the associated information of x includes a'bcd. Furthermore, assuming that the character at a small distance with a further includes a", the associated information of x further includes a"bcd. Furthermore, assuming that a character at a small distance with b includes b', the associated information of x further includes ab'cd, and the rest can be done in the same manner, such that all the associated information can be obtained.

It can be understood that, the specific meaning of a small distance above may be set according to actual demands. For example, characters corresponding to four adjacent keys may be determined as the characters at a small distance, or characters at a distance of no more than two keys are all determined as the characters at a small distance, and so on.

S12. To-be-verified information is received.

The user may input the to-be-verified information via a keyboard.

For example, the user inputs a password or the like by using a virtual keyboard of a mobile phone.

S13. The to-be-verified information is verified according to the pre-stored information.

When the mobile phone terminal directly stores a plaintext password, input information may be directly compared with the pre-stored information, and when they are the same, the verification succeeds; otherwise, the verification fails.

This embodiment takes storing encrypted first information as an example.

When the pre-stored information is the encrypted first information, the step of verifying the to-be-verified information according to the pre-stored information includes:
encrypting the to-be-verified information by using the same encryption algorithm as that of the first information to obtain encrypted to-be-verified information; and
comparing the encrypted to-be-verified information with the pre-stored information.

Assuming that the to-be-verified information input by the user is y, and a Hash encryption algorithm is adopted, H(y) may be calculated first, and then H(y) is compared with H(x) and H'.

S14. To-be-verified information that is re-input is received if the to-be-verified information belongs to the associated information.

For example, if H(y) belongs to H', the to-be-verified information that is re-input may be received. Thereafter, the verification may be performed again.

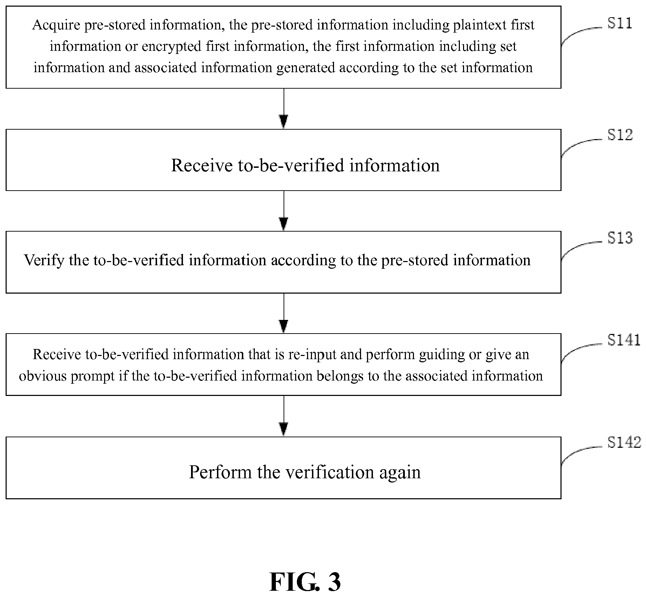

Referring to FIG. 3, in this embodiment, when the to-be-verified information belongs to the associated information, the following steps may be specifically performed:
S141. The to-be-verified information that is re-input is received, and guiding is performed or an obvious prompt is given.

Specifically, the step of performing guiding or giving an obvious prompt includes:
prolonging a plaintext displaying time of the to-be-verified information that is re-input after receiving the to-be-verified information that is re-input.

Non-plaintext information, such as symbols *, is usually displayed finally during password verification, and plaintext information input by the user may be displayed for a short time before the symbols * are displayed.

In this embodiment, when the plaintext displaying time is prolonged, the plaintext displaying time of each information item in the to-be-verified information may be prolonged, or, only the plaintext displaying time of an information item that is incorrectly input last time is prolonged. For example, if the to-be-verified information is abcd, and an error occurs in a during a first detection, only the plaintext displaying time of a may be prolonged, or the plaintext displaying times of a, b, c, and d may all be prolonged. In addition, similar executions may also be performed during the displaying in plaintext. For example, only the information item that is incorrectly input last time is displayed in plaintext, or all the information items are displayed in plaintext.

Thereafter, the following steps may be further performed:
S142. Verification is performed again.

For example, the user may check the to-be-verified information that is re-input according to prompt information or information displayed in plaintext. After the to-be-verified information re-input by the user is received at the mobile phone terminal, the information may be compared with the pre-stored information, to obtain a verification result.

In this embodiment, the time for displaying the plaintext input information is prolonged, such that the user can better see the information input by himself, to verify whether the information is correctly input. The specific prolonging time may be set.

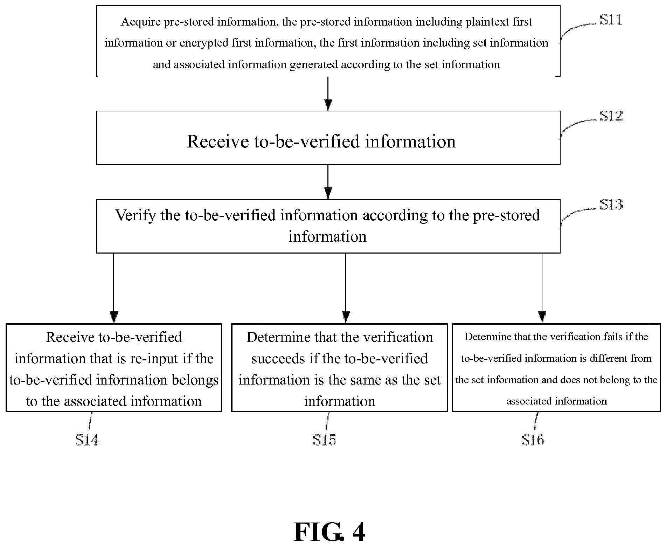

In another aspect, referring to FIG. 4, after the user verifies the input to-be-verified information, the method may further include:
S15. It is determined that the verification succeeds if the to-be-verified information is the same as the set information.

For example, when a value obtained after Hash encryption is stored, and the to-be-verified information input by the user is y, y is hashed to obtain H(y), and if H(y) is the same as H(x), the verification succeeds.

S16. It is determined that the verification fails if the to-be-verified information is different from the set information and does not belong to the associated information.

For example, if H(y) is different from H(x), and H(y) does not belong to H', it is determined that the verification fails. At this time, information indicating that the password is input incorrectly is displayed to the user.

In this embodiment, not only the set information but also the associated information obtained according to the set information may be generated, and when the to-be-verified information belongs to the associated information, the verification is performed again. Another chance for verification may be provided after an input error of the user caused by a small size of a keyboard or other reasons, thereby reducing input errors caused by a small size of a keyboard and enhancing input effects. It is different from a direct verification failure due to a malicious input error, thereby effectively distinguishing an unintentional error from a malicious error, and reducing information verification failures caused by an unintentional input error.

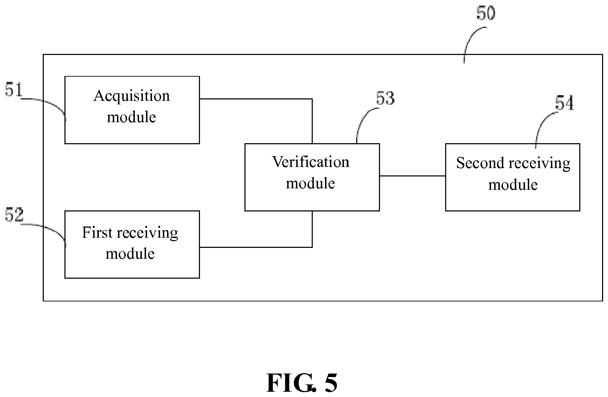

FIG. 5 is a schematic structural diagram of an information input apparatus according to another embodiment of the present application. The apparatus 50 includes: an acquisition module 51, a first receiving module 52, a verification module 53, and a second receiving module 54.

The acquisition module 51 is configured to acquire pre-stored information, the pre-stored information including plaintext first information or encrypted first information, the first information including set information and associated information generated according to the set information;

The method of this embodiment may be used for information verification in various scenarios, for example, for password verification, ID card number verification, bank card number verification, mobile phone number verification, and so on. In this embodiment, password verification is taken as an example.

Before the password verification, a user may preset a password. For example, the password is set as x. It can be understood that, the password x set by the user may include one or more information items, and each information item may be a number, a letter, or the like.

Further, by taking that the password is stored at a mobile phone terminal as an example, the password may be stored in plaintext at the mobile phone terminal, for example, directly stored as x. Or, in order to enhance security, a plaintext password is encrypted before being stored, for example, an encrypted x stored at the mobile phone terminal. It can be understood that, there are various encryption algorithms, which, for example, is specifically a Hash algorithm. In this embodiment, a Hash encrypted password stored at the mobile phone terminal is taken as an example. Assume that x is represented as H(x) after the Hash encryption is performed.

In the prior art, the pre-stored information is H(x) at most, and the verification will fail if what the user inputs is not x.

In this embodiment, not only H(x) can be stored, but also associated information can be obtained according to x, and information obtained after the Hash encryption is performed on the associated information is further stored at the mobile phone terminal.

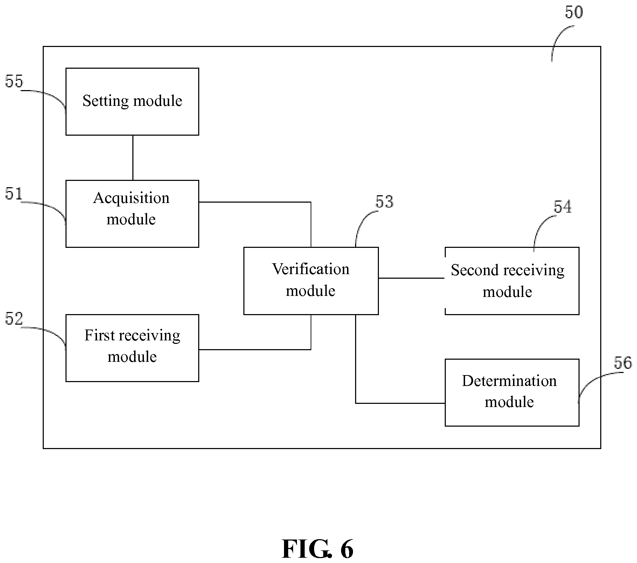

Referring to FIG. 6, the apparatus 50 further includes:
a setting module 55 configured to randomly select an information item from the set information, and acquire a new information item corresponding to the selected information item, wherein a distance between positions of the new information item and the selected information item on a keyboard is in a preset range; and replace the selected information item in the set information with the new information item to obtain the associated information.

For example, one item of the password x set by the user is a, then a character at a small distance with a on a virtual keyboard or a physical keyboard is selected as a new character corresponding to a. Assuming that the new character is represented by a', a' is used to place a to compose a new password x'. The new password x' is associated information of x. After the Hash encryption is performed, the encrypted associated information may be represented as: H(x'), H(x"), ..., and this sequence is recorded as H'. Specifically, for example, assuming that x is abcd, and the character at a small distance with a includes a', the associated information of x includes a'bcd. Furthermore, assuming that the character at a small distance with a further includes a", the associated information of x further includes a"bcd. Furthermore, assuming that a character at a small distance with b includes b', the associated information of x further includes ab'cd, and the rest can be done in the same manner, such that all the associated information can be obtained.

It can be understood that, the specific meaning of a small distance above may be set according to actual demands. For example, characters corresponding to four adjacent keys may be determined as the characters at a small distance, or characters at a distance of no more than two keys are all determined as the characters at a small distance, or the like.

The first receiving module 52 is configured to receive to-be-verified information;
wherein the user may input the to-be-verified information via a keyboard.

For example, the user inputs a password or the like by using a virtual keyboard of a mobile phone.

The verification module 53 is configured to verify the to-be-verified information according to the pre-stored information;

When the mobile phone terminal directly stores a plaintext password, input information may be directly compared with the pre-stored information, and when they are the same, the verification succeeds; otherwise, the verification fails.

This embodiment takes storing encrypted first information as an example.

When the pre-stored information is the encrypted first information, the verification module 53 is specifically configured to:
encrypt the to-be-verified information by using the same encryption algorithm as that of the first information to obtain encrypted to-be-verified information; and
compare the encrypted to-be-verified information with the pre-stored information.

Assuming that the to-be-verified information input by the user is y, and a Hash encryption algorithm is adopted, H(y) may be calculated first, and then H(y) is compared with H(x) and H'.

The second receiving module 54 is configured to receive to-be-verified information that is re-input if the to-be-verified information belongs to the associated information.

For example, if H(y) belongs to H', the to-be-verified information that is re-input may be received. Thereafter, the verification may be performed again.

The second receiving module is further configured to:
prolong a plaintext displaying time of the to-be-verified information that is re-input after the to-be-verified information that is re-input is received.

Non plain-text information, such as symbols *, is usually displayed finally during password verification, and plaintext information input by the user may be displayed for a short time before the symbols * are displayed.

In this embodiment, when the plaintext displaying time is prolonged, the plaintext displaying time of each information item in the to-be-verified information may be prolonged, or, only the plaintext displaying time of an information item that is incorrectly input last time is prolonged. For example, if the to-be-verified information is abcd, and an error occurs in a during a first detection, only the plaintext displaying time of a may be prolonged, or the plaintext displaying times of a, b, c, and d may all be prolonged. In addition, similar executions may also be performed during the displaying in plaintext. For example, only the information item that is incorrectly input last time is displayed in plaintext, or all the information items are displayed in plaintext.

In this embodiment, the time for displaying the plaintext input information is prolonged, such that the user may better see the information input by himself, to verify whether the input is correct. The specific prolonging time may be set.

With reference to FIG. 6, the apparatus 50 further includes:
a determination module 56 configured to determine that the verification succeeds if the to-be-verified information is the same as the set information; or determine that the verification fails if the to-be-verified information is different from the set information and does not belong to the associated information.

For example, when a value obtained after Hash encryption is stored, and the to-be-verified information input by the user is y, y is hashed to obtain H(y), and if H(y) is the same as H(x), the verification succeeds.

For example, if H(y) is different from H(x), and H(y) does not belong to H', it is determined that the verification fails. At this time, information indicating that the password is input incorrectly is displayed to the user.

In this embodiment, not only the set information but also the associated information obtained according to the set information may be generated, and when the to-be-verified information belongs to the associated information, the verification is performed again. Another chance for verification may be provided after an input error of the user caused by a small size of a keyboard or other reasons, thereby reducing input errors caused by a small size of a keyboard and enhancing input effects. It is different from a direct verification failure due to a malicious input error, thereby effectively distinguishing an unintentional error from a malicious error, and reducing an information verification failure caused by an unintentional input error.

It should be noted that, in the description of the present application, terms "first" and "second" are merely used for the purpose of description, and cannot be interpreted as indicating or implying relative importance. Moreover, in the description of the present application, "multiple" means two or more, unless otherwise specified.

Any process or method described in the flowcharts or described in any other way herein may be understood to include one or more modules, segments or parts for executable instruction codes that realize particular logic functions or process steps. Moreover, preferred embodiments of the present application include other implementations, in which the function may be performed in an order different from what is depicted or discussed, including a substantially simultaneous manner or an opposite order based on the related functions. This should be understood by those skilled in the art to which embodiments of the present application belong.

It should be understood that each part of the present application may be realized by the hardware, software, firmware or their combination. In the above embodiments, a plurality of steps or methods may be implemented by the software or firmware stored in the memory and executed by the appropriate instruction execution system. For example, if it is implemented by the hardware, likewise in another embodiment, the steps or methods may be implemented by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or part of the steps in the above embodiment method may be achieved by commanding the related hardware with programs. The programs may be stored in a computer readable storage medium, and the programs, when run, include one or a combination of the steps in the method embodiments.

In addition, function units in the embodiments of the present application may be integrated in a processing module, or the units may be physically provided in a separate manner, or two or more units may be integrated in one module. The integrated module may be realized in a form of hardware or in a form of software function module. When the integrated module is realized in a form of software function module and is sold or used as a standalone product, the integrated module may also be stored in a computer readable storage medium.

The storage medium mentioned above may be a read-only memory, a magnetic disk, a CD, etc.

Reference throughout this specification to "an embodiment," "some embodiments," "an example," "a specific example," or "some examples," means that a specific feature, structure, material, or characteristic described in connection with such embodiment or example is included in at least one embodiment or example of the present application. The illustrative expression of these terms throughout this specification is not necessarily referring to a same embodiment or example. Furthermore, the specific features, structures, materials, or characteristics may be combined in any suitable manner in one or more embodiments or examples.

Although the embodiments of the present application have been shown and described in the above, it would be appreciated that the above embodiments are exemplary and cannot be construed as limiting the present application, and those skilled in the art can make changes, modifications, replacements and alternations in the embodiments within the scope of the appended claims.

## Claims

1. An information input method performed by an information input apparatus (50), the method comprising:
acquiring pre-stored information, the pre-stored information comprising plaintext first information or encrypted first information, the first information comprising set information and associated information generated according to the set information (S11), wherein generating the associated information (S10) comprises:
randomly selecting an information item from the set information;
acquiring a new information item corresponding to the selected information item, wherein a distance between positions of the new information item and the selected information item on a keyboard is within a preset range; and
replacing the selected information item in the set information with the new information item to obtain the associated information;
receiving to-be-verified information (S12);
verifying the to-be-verified information according to the pre-stored information (S13) and then:
if the to-be-verified information belongs to the associated information (S14):
receiving to-be-verified information that is re-input, and prolonging a plaintext displaying time of the to-be-verified information that is re input after receiving the to-be-verified information that is re-input (S141);
otherwise:
determining that the verification succeeds if the to-be-verified information is the same as the set information (S15); and otherwise
determining that the verification fails if the to-be-verified information is different from the set information and does not belong to the associated information (S16).

2. The method of claim 1, further comprising verifying the to-be-verified information (S142) that is re-input.

3. The method of claim 1, wherein when the pre-stored information is the encrypted first information, the step of verifying the to-be-verified information according to the pre-stored information comprises:
encrypting the to-be-verified information by using the same encryption algorithm as that of the first information to obtain encrypted to-be-verified information; and
comparing the encrypted to-be-verified information with the pre-stored information.

4. The method of claim 3, wherein the encryption algorithm is a Hash algorithm.

5. An information input apparatus (50), comprising:
an acquisition module (51) configured to acquire pre-stored information, the pre-stored information comprising plaintext first information or encrypted first information, the first information comprising set information and associated information generated according to the set information, wherein generating the associated information comprises:
randomly selecting, by a setting module (55), an information item from the set information;
acquiring, by the setting module (55), a new information item corresponding to the selected information item, wherein a distance between positions of the new information item and the selected information item on a keyboard is within a preset range; and
replacing, by the setting module (55), the selected information item in the set information with the new information item to obtain the associated information;
a first receiving module (52) configured to receive to-be-verified information;
a verification module (53) configured to verify the to-be-verified information according to the pre-stored information;
a determination module (56) configured to (i) determine that the verification succeeds if the to-be-verified information is the same as the set information and to (ii) determine that the verification fails if the to-be-verified information is different from the set information and does not belong to the associated information; and
a second receiving module (54) configured to receive to-be-verified information that is re-input if the to-be-verified information belongs to the associated information and to prolong a plaintext displaying time of the to-be-verified information that is re-input after the to-be-verified information that is re-input is received.

6. The apparatus of claim 5, wherein the second receiving module (54) is further configured to verify the to-be-verified information that is re-input.

7. The apparatus of claim 5, wherein when the pre-stored information is the encrypted first information, the verification module is specifically configured to:
encrypt the to-be-verified information by using the same encryption algorithm as that of the first information to obtain encrypted to-be-verified information; and
compare the encrypted to-be-verified information with the pre-stored information.

## Patentansprüche

1. Informationseingabeverfahren, das von einer Informationseingabevorrichtung (50) durchgeführt wird, wobei das Verfahren umfasst:
Erfassen vorgespeicherter Informationen, wobei die vorgespeicherten Informationen erste Nurtext-Informationen oder erste verschlüsselte Informationen umfassen, wobei die ersten Informationen festgelegte Informationen und gemäß der festgelegten Informationen erzeugte zugehörige Informationen (S11) umfassen, wobei das Erzeugen der zugehörigen Informationen (S10) umfasst:
zufälliges Auswählen eines Informationselements aus den festgelegten Informationen;
Erfassen eines neuen Informationselements, das dem ausgewählten Informationselement entspricht, wobei ein Abstand zwischen den Positionen des neuen Informationselements und des ausgewählten Informationselements auf einer Tastatur in einem voreingestellten Bereich liegt; und
Ersetzen des ausgewählten Informationselements in den festgelegten Informationen durch das neue Informationselement, um die zugehörigen Informationen zu erhalten;
Empfangen von zu verifizierenden Informationen (S12);
Verifizieren der zu verifizierenden Informationen gemäß den vorgespeicherten Informationen (S13) und dann:
wenn die zu verifizierenden Informationen zu den zugehörigen Informationen gehören (S14):
Empfangen von neu eingegebenen zu verifizierenden Informationen und Verlängern einer Nurtext-Anzeigezeit der zu verifizierenden Informationen, die nach dem Empfangen der neu eingegebenen zu verifizierenden Informationen neu eingegeben werden (S141);
andernfalls:
Bestimmen, dass die Verifizierung erfolgreich ist,
wenn die zu verifizierenden Informationen dieselben sind wie die festgelegten Informationen (S15); und andernfalls Bestimmen, dass die Verifizierung fehlschlägt, wenn sich die zu verifizierenden Informationen von den festgelegten Informationen unterscheiden und nicht zu den zugehörigen Informationen (S16) gehören.

2. Verfahren nach Anspruch 1, ferner umfassend das Verifizieren der neu eingegebenen zu verifizierenden Informationen (S142).

3. Verfahren nach Anspruch 1, wobei, wenn die vorgespeicherten Informationen die verschlüsselten ersten Informationen sind, der Schritt des Verifizierens der zu verifizierenden Informationen gemäß den vorgespeicherten Informationen umfasst:
Verschlüsseln der zu verifizierenden Informationen mithilfe desselben Verschlüsselungsalgorithmus wie dem bei den ersten Informationen, um verschlüsselte zu verifizierende Informationen zu erhalten; und
Vergleichen der verschlüsselten zu verifizierenden Informationen mit den vorgespeicherten Informationen.

4. Verfahren nach Anspruch 3, wobei der Verschlüsselungsalgorithmus ein Hash-Algorithmus ist.

5. Informationseingabevorrichtung (50), umfassend:
ein Erfassungsmodul (51), das dazu ausgelegt ist, vorgespeicherte Informationen zu erfassen, wobei die vorgespeicherten Informationen erste Nurtext-Informationen oder erste verschlüsselte Informationen umfassen, wobei die ersten Informationen festgelegte Informationen und gemäß der festgelegten Informationen erzeugte zugehörige Informationen umfassen, wobei das Erzeugen der zugehörigen Informationen umfasst:
zufälliges Auswählen, durch ein Einstellmodul (55),
eines Informationselements aus den festgelegten Informationen;
Erfassen, durch das Einstellmodul (55), eines neuen Informationselements, das dem ausgewählten Informationselement entspricht, wobei ein Abstand zwischen Positionen des neuen Informationselements und des ausgewählten Informationselements auf einer Tastatur in einem voreingestellten Bereich liegt; und
Ersetzen, durch das Einstellmodul (55), des
ausgewählten Informationselements in den festgelegten Informationen durch das neue Informationselement, um die zugehörigen Informationen zu erhalten;
ein erstes Empfangsmodul (55), das dazu ausgelegt ist, zu verifizierende Informationen zu empfangen;
ein Verifizierungsmodul (53), das dazu ausgelegt ist, zu verifizierende Informationen gemäß den vorgespeicherten Informationen zu verifizieren;
ein Bestimmungsmodul (56), das dazu ausgelegt ist, (i) zu bestimmen, dass die Verifizierung erfolgreich ist, wenn die zu verifizierenden Informationen dieselben sind wie die festgelegten Informationen und (ii) zu bestimmen, dass die Verifizierung fehlschlägt, wenn sich die zu verifizierenden Informationen von den festgelegten Informationen unterscheiden und nicht zu den zugehörigen Informationen gehören; und
ein zweites Empfangsmodul (54), das dazu ausgelegt ist, neu eingegebene zu verifizierende Informationen zu empfangen, wenn die zu verifizierenden Informationen zu den zugehörigen Informationen gehören, und eine Nurtext-Anzeigezeit der zu verifizierenden Informationen zu verlängern, die neu eingegeben wurden, nachdem die neu eingegebenen zu verifizierenden Informationen empfangen wurden.

6. Verfahren nach Anspruch 5, wobei das zweite Empfangsmodul (54) ferner dazu ausgelegt ist, die neu eingegebenen zu verifizierenden Informationen zu verifizieren.

7. Vorrichtung nach Anspruch 5, wobei, wenn die vorgespeicherten Informationen die verschlüsselten ersten Informationen sind, das Verifizierungsmodul speziell dazu ausgelegt ist:
die zu verifizierenden Informationen mithilfe desselben Verschlüsselungsalgorithmus wie dem der ersten Informationen zu verschlüsseln, um verschlüsselte zu verifizierende Informationen zu erhalten; und
die verschlüsselten zu verifizierenden Informationen mit den vorgespeicherten Informationen zu vergleichen.

## Revendications

1. Procédé d'entrée d'informations mis en œuvre par un appareil d'entrée d'informations (50), le procédé comprenant :
l'acquisition d'informations préenregistrées, les informations préenregistrées comprenant des premières informations en texte clair ou des premières informations chiffrées, les premières informations comprenant des informations définies et des informations associées générées conformément aux informations définies (S11), dans lequel la génération des informations associées (S10) comprend :
la sélection aléatoire d'un élément d'information parmi les informations définies ;
l'acquisition d'un nouvel élément d'information correspondant à l'élément d'information sélectionné, une distance entre les positions du nouvel élément d'information et de l'élément d'information sélectionné sur un clavier étant comprise dans une plage prédéfinie ; et
le remplacement de l'élément d'information sélectionné dans les informations définies par le nouvel élément d'information pour obtenir les informations associées ;
la réception d'informations à vérifier (S 12) ;
la vérification des informations à vérifier en fonction des informations préenregistrées (S 13) puis :
si les informations à vérifier appartiennent aux informations associées (S14):
la réception des informations à vérifier qui sont réintroduites et le prolongement d'un temps d'affichage en texte clair des informations à vérifier qui sont réintroduites après réception des informations à vérifier qui sont réintroduites (S 141) ;
sinon :
la détermination que la vérification a réussi si les informations à vérifier sont les mêmes que les informations définies (S 15) ; et faute de quoi la détermination que la vérification a échoué si les informations à vérifier sont différentes des informations définies et n'appartiennent pas aux informations associées (S16).

2. Procédé selon la revendication 1, comprenant en outre la vérification des informations à vérifier (S 142) qui sont réintroduites.

3. Procédé selon la revendication 1, dans lequel lorsque les informations pré-enregistrées sont les premières informations chiffrées, l'étape de vérification des informations à vérifier selon les informations pré-enregistrées comprend :
le chiffrement des informations à vérifier en utilisant le même algorithme de chiffrement que celui des premières informations pour obtenir des informations chiffrées à vérifier ; et
la comparaison des informations chiffrées à vérifier avec les informations préenregistrées.

4. Procédé selon la revendication 3, dans lequel l'algorithme de chiffrement est un algorithme de hachage.

5. Appareil d'entrée d'informations (50), comprenant :
un module d'acquisition (51) configuré pour acquérir des informations pré-enregistrées, les informations pré-enregistrées comprenant des premières informations en texte clair ou des premières informations chiffrées, les premières informations comprenant des informations définies et des informations associées générées conformément aux informations définies, dans lequel la génération des informations associées comprend :
la sélection aléatoire, par un module de réglage (55), d'un élément d'information parmi les informations définies ;
l'acquisition, par le module de réglage (55), d'un nouvel élément d'information correspondant à l'élément d'information sélectionné, une distance entre les positions du nouvel élément d'information et de l'élément d'information sélectionné sur un clavier étant comprise dans une plage prédéfinie ; et
le remplacement, par le module de réglage (55), de l'élément d'information sélectionné dans les informations définies par le nouvel élément d'information pour obtenir les informations associées ;
un premier module de réception (52) configuré pour recevoir des informations à vérifier ;
un module de vérification (53) configuré pour vérifier les informations à vérifier en fonction des informations pré-enregistrées ;
un module de détermination (56) configuré pour (i) déterminer que la vérification a réussi si les informations à vérifier sont les mêmes que les informations définies et pour (ii) déterminer que la vérification a échoué si les informations à vérifier sont différentes des informations définies et n'appartiennent pas aux informations associées ; et
un second module de réception (54) configuré pour recevoir des informations à vérifier qui sont réintroduites si les informations à vérifier appartiennent aux informations associées et pour prolonger un temps d'affichage en texte clair des informations à vérifier qui sont réintroduites après la réception des informations à vérifier qui sont réintroduites.

6. Appareil selon la revendication 5, dans lequel le second module de réception (54) est en outre configuré pour vérifier les informations à vérifier qui sont réintroduites.

7. Appareil selon la revendication 5, dans lequel lorsque les informations pré-enregistrées sont les premières informations chiffrées, le module de vérification est spécifiquement configuré pour :
chiffrer les informations à vérifier en utilisant le même algorithme de chiffrement que celui des premières informations pour obtenir des informations chiffrées à vérifier ; et
comparer les informations chiffrées à vérifier avec les informations pré-enregistrées.
